# EUROPEAN PATENT APPLICATION

(11) **EP 4 671 837 A1**
(43) Date of publication of application: **31.12.2025**
(21) Application number: 25169234.9
(22) Date of filing: 08.04.2025
(51) Int. Cl.: G02B 6/12, G02B 6/122, G02B 6/125

(54) **APPARATUS AND METHOD FOR AN OPTICAL COUPLER**

(30) Priority: 26.06.2024 US 202418755213
(71) Applicant: Honeywell International Inc., Charlotte, NC 28202 (US)
(72) Inventor: PUCKETT, Matthew Wade, Charlotte, 28202 (US); HOYT, Chad, Charlotte, 28202 (US); WU, Jianfeng, Charlotte, 28202 (US); NELSON, Karl D., Charlotte, 28202 (US); JIANG, Wei Charles, Charlotte, 28202 (US); SALMAN, Jad, Charlotte, 28202 (US); FERTIG, Chad, Charlotte, 28202 (US); HORSTMAN, Luke, Charlotte, 28202 (US)
(74) Representative: Haseltine Lake Kempner LLP

(57) **Abstract**

Techniques are provided for implementing a low insertion loss optical coupler utilizing adiabatic tapering of spacings between two adjacent optical waveguides and tapering of a portion of one of the optical waveguides. An optical resonator with a higher quality factor may be formed using two of the low insertion loss optical couplers.

## Description

This invention was made with Government support. The Government has certain rights in the invention.

### BACKGROUND

Optical couplers are widely used in optical systems. Conventional optical couplers have higher than desired losses. Such losses are due to optical energy, received by an optical coupler, being emitted in free space and/or coupling energy into undesired modes.

### SUMMARY

In some aspects, the techniques described herein relate to an optical coupler, including: a first core including a first portion, a second portion, and a third portion, wherein the second portion of the first core is optically connected between the first portion and the second portion of the first core, and wherein the first core has a first surface; and a second core including a first portion, a second portion, and a third portion, wherein the second portion of the second core is optically connected between the first portion and the second portion of the second core, and wherein the second core has a second surface; wherein each of the first and the second cores are covered by cladding, and wherein each of the first and the second cores has an index of refraction higher than an index of refraction of the cladding; wherein a first spacing between the first surface along the first portion of the first core and the second surface along the first portion of the second core adiabatically tapers narrower towards the second portions of the first and the second cores; wherein a width of the second portion of the second core is tapered narrower or wider from or after the first portion of the second core and towards the third portion of the second core; wherein a width of the third portion of the second core is narrower than a width of the first core; wherein a second spacing between the first surface along the third portion of the first core and the second surface along the third portion of the second core adiabatically tapers wider away from the second portions of the first and the second cores.

In some aspects, the techniques described herein relate to a method of reducing insertion loss in an optical coupler including a first core including a first surface and a second core including a second surface, the method including: receiving, at a first port of a first portion of the second core, an input optical signal consisting of only a transverse electric fundamental mode or a transverse magnetic fundamental mode, wherein the second core include a first portion, a second portion, and a third portion, and wherein the second portion of the second core is optically connected between the first portion and the second portion of the second core; wherein a first spacing between the first surface along the first portion of the first core and the second surface along the first portion of the second core adiabatically tapers narrower towards the second portions of the first and the second cores, wherein each of the first core is covered by cladding, and wherein each of the first and the second cores has an index of refraction which is larger than an index of refraction of the cladding; coupling a coupled optical signal from the second portion of the second core to the second portion of the first core, wherein the coupled optical signal includes at least a portion of power of the input optical signal; emitting a first output optical signal from the third portion of the second core, wherein the first output optical signal includes at least another portion of power of the input optical signal; and emitting a second output optical signal from the third portion of the first core, wherein the second output optical signal is at least a portion of power of the coupled optical signal, and wherein a second spacing between the first surface along the third portion of the first core and the second surface along the third portion of the second core adiabatically tapers wider away from the second portions of the first and the second cores.

In some aspects, the techniques described herein relate to an optical resonator including: a first optical coupler including: a first core including a first portion, a second portion, and a third portion, wherein the second portion of the first core is optically connected between the first portion and the second portion of the first core, and wherein the first core has a first surface; and a second core including a first portion, a second portion, and a third portion, wherein the second portion of the second core is optically connected between the first portion and the second portion of the second core, and wherein the second core has a second surface; wherein each of the first and the second cores are covered by cladding, and wherein each of the first and the second cores has an index of refraction higher than an index of refraction of the cladding; wherein a first spacing between the first surface along the first portion of the first core and the second surface along the first portion of the second core adiabatically tapers narrower towards the second portions of the first and the second cores; wherein a width of the second portion of the second core is tapered narrower or wider from or after the first portion of the second core and towards the third portion of the second core; wherein a width of the third portion of the second core is narrower than a width of the first core; wherein a second spacing between the first surface along the third portion of the first core and the second surface along the third portion of the second core adiabatically tapers wider away from the second portions of the first and the second cores; a second optical coupler including: a third core including a first portion, a second portion, and a third portion, wherein the second portion of the third core is optically connected between the first portion and the second portion of the third core, and wherein the third core has a third surface; and a fourth core including a first portion, a second portion, and a third portion, wherein the second portion of the fourth core is optically connected between the first portion and the second portion of the fourth core, and wherein the fourth core has a fourth surface; wherein each of the third and the fourth cores are covered by the cladding, and wherein each of the third and the fourth cores has an index of refraction higher than an index of refraction of the cladding; wherein a third spacing between the third surface along the first portion of the third core and the fourth surface along the first portion of the fourth core adiabatically tapers narrower towards the second portions of the third and the fourth cores; wherein a width of the second portion of the fourth core is tapered narrower or wider from or after the first portion of the fourth core and towards the third portion of the fourth core; wherein a width of the third portion of the fourth core is narrower than a width of the third core; wherein a fourth spacing between the third surface along the third portion of the third core and the fourth surface along the third portion of the fourth core adiabatically tapers wider away from the second portions of the third and the fourth cores. a first resonator optical waveguide optically connected between a first port of the first portion of the first core and a second port of the third portion of the fourth core; and a second resonator optical waveguide optically connected between a second port of the third portion of the first core and a first port of a first portion of the fourth core.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates a plan view of one embodiment of an optical coupler with diminished insertion loss;
FIG. 2 illustrates a cross-sectional diagram of the optical coupler with diminished insertion loss along line AA-AA';
FIG. 3 illustrates a plan view of an optical resonator including two optical couplers with diminished insertion loss; and
FIG. 4 illustrates one embodiment of a method of optically coupling an optical signal in an optical coupler.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments of the invention are an optical coupler which has lower insertion loss than a conventional optical coupler. Further, such lower insertion loss is over a broader bandwidth in comparison to a conventional optical coupler. The optical coupler with lower insertion loss may be used to create a resonator with a higher quality factor which therefore requires a lower optical pump source.

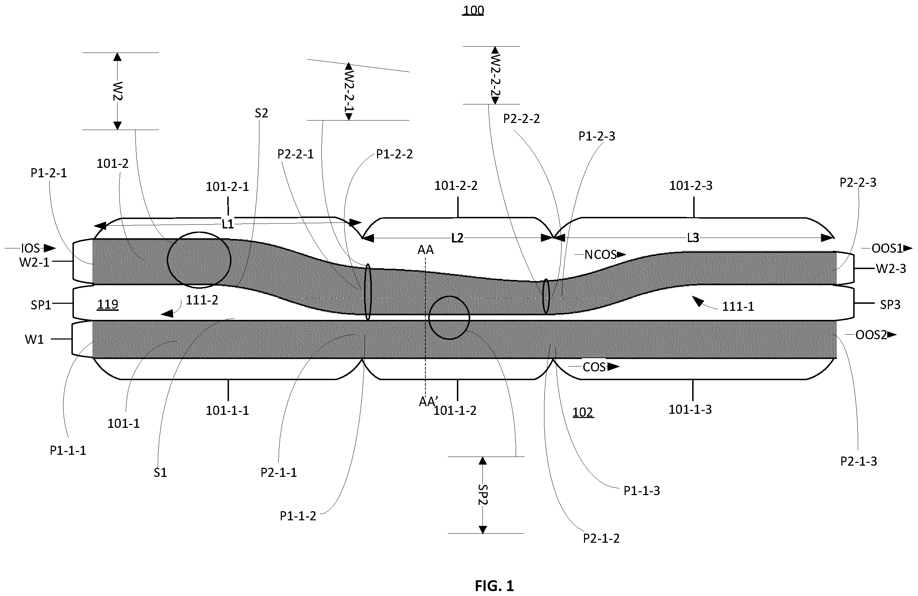

FIG. 1 illustrates a plan view of one embodiment of an optical coupler with diminished insertion loss (or "optical coupler") 100. The optical coupler 100 includes a first core 101-1 and a second core 101-2. Each of the first core 101-1 and the second core 101-2 are surrounded by cladding 119. Thus, the index of refraction of each core 101-1, 101-2 is greater than the index of refraction of the cladding 119. A first optical waveguide 111-1 is formed by the first core 101-1 surrounded by the cladding 119. A second optical waveguide 111-2 is formed by the second core 101-2 surrounded by the cladding 119. Optionally, each core may be made from silicon nitride, and the cladding may be made from silicon dioxide.

For pedagogical purposes, the first core 101-1 is illustrated as being linear and the second core 101-2 is illustrated as being substantially linear; in other embodiments as is described elsewhere herein, the first core 101-1 may not be linear, *e.g*., may be curved, and the second core 101-2 may not be substantially linear, *e.g*., may be curved. Optionally, each of the first and the second optical waveguides 111-1, 111-2 is planar optical waveguide formed on an optional substrate 102, *e.g.,* which optionally may be a semiconductor or an insulator; however, each of the optical waveguides 111-1, 111-2 may be formed by another type of optical waveguide.

Each of the first and the second cores 101-1, 101-2 includes a first portion 101-1-1, 101-2-1, a second portion 101-1-2, 101-2-2, and a third portion 101-1-3, 101-2-3. The first portions 101-1-1, 101-2-1 are adjacent to one another over a first length L1. The second portions 101-1-2, 101-2-2 are adjacent to one another over a second length L2. The third portions 101-1-3, 101-2-3 are adjacent to one another over a third length L3. A line AA-AA' bisects the adjacent second portions 101-1-2, 101-2-2.

Each portion 101-1-1, 101-2-1, 101-1-2, 101-2-2, 101-1-3, 101-2-3 has a first port P1-1-1, P1-1-2, P1-1-3, P1-2-1, P1-2-2, P1-2-3 and a second port P2-1-1, P2-1-2, P2-1-3, P2-2-1, P2-2-2, P2-2-3. A second port P2-1-1, P2-2-1 of a first portion 101-1-1, 101-2-1 of a core, *i.e.,* the first or the second core 101-1, 101-2, is optically connected to a first port P1-1-2, P1-2-2 of a second portion 101-1-2, 101-2-2 of the core. A second port P2-1-2, P2-2-2 of the second portion 101-1-2, 101-2-2 of the core is optically connected to a first port P1-1-3, P1-2-3 of the third portion 101-1-3, 101-2-3 of the core.

The first port P-1-1-1 of the first portion 101-1-1 of the first core 101-1 also is a first port of the first optical waveguide 111-1. The second port P-2-1-3 of the third portion 101-1-3 of the first core 101-1 also is a second port of the first optical waveguide 111-1. The first port P-1-2-1 of the first portion 101-2-1 of the second core 101-2 also is a first port of the second optical waveguide 111-2. The second port P-2-2-3 of the third portion 101-2-3 of the second core 101-2 also is a second port of the second optical waveguide 111-2.

The first core 101-1 has a first width W1-1. Optionally, the first width W1-1 is constant along the first core 101-1, *e.g.,* each of the first portion 101-1-1, the second portion 101-1-2, and the third portion 101-1-3 of the first core 101-1.

The second core 101-2 has a variable width. The first portion 101-2-1 of the second core 101-2 has a second width W2-1. Optionally, the second width W2-1 is constant. The second portion 101-2-2 of the second core 101-2 has a tapered width, *e.g.,* an adiabatically tapered width, narrowing or widening after the first port P1-2-2 of the second portion 101-2-2 of the second core 101-2 and in a direction towards the second port P2-2-2 of the second portion 101-2-2 of the second core 101-2; this facilitates coupling a portion of the input optical signal IOS into the second portion 101-1-2 of the first core 101-1. Thus, a third width W2-2-1 at the first port P1-2-2 of the second portion 101-2-2 of the second core 101-2 is larger than a fourth width W2-2-2 at the second port P2-2-2 of the second portion 101-2-2 of the second core 101-2.

The third portion 101-2-3 of the second core 101-2 has a fifth width W2-3. The fifth width W2-3 anywhere along the third portion 101-2-3 of the second core 101-2 is smaller (or narrower) than the first width W1 anywhere along the first core 101-1. Optionally, the fifth width W2-3 is constant along the third portion 101-2-3 of the second core 101-2 is constant.

The first core 101-1 has a first surface S1 opposite and adjacent to a second surface S2 of the second core 101-2. A first spacing SP1, between the first surface S1 (of the first portion 101-1-1 of the first core 101-1) and the second surface S2 (of the first portion 101-2-1 of the second core) tapers, *e.g*., adiabatically, narrower after the first port P1-2-1 of the first portion 101-2-1 of the second core 101-2 and towards the second port P2-2-1 of the first portion 101-2-1 of the second core 101-2.

A second spacing SP2 is between the first surface S1 (of the second portion 101-1-2 of the first core 101-1) and the second surface S2 (of the second portion 101-2-2 of the second core 101-2). Optionally, the second spacing SP2 is constant along the second portions 101-1-2, 101-2-2. A third spacing SP3, between the first surface S1 (of the third portion 101-1-3 of the first core 101-1) and the second surface S2 (of the third portion 101-2-3 of the second core 101-2) tapers, *e.g*., adiabatically, wider after the first port P1-2-3 of the third portion 101-2-3 of the second core 101-2 and towards the second port P2-2-3 of the third portion 101-2-3 of the second core 101-2.

Optionally, a first port of the second optical waveguide 111-2 (or the first port P1-2-1 of the first portion 101-2-1 of the second core 101-2) is configured to receive an input optical signal IOS, *e.g.,* having a single fundamental mode for example a transverse electrical (TE) mode (TE0) or a fundamental transverse magnetic (TM) mode (TM0). A portion, *e.g*., substantially all, of the input optical signal IOS is incident upon a first port P1-2-2 of the second portion 101-2-2 of the second core 101-2. Part of the optical power of the portion of the input optical signal IOS incident upon the first port P1-2-2 of the second portion 101-2-2 of the second core 101-2 is coupled to the second portion 101-1-2 of the first core 101-1.

An optical signal comprising such coupled optical power is also referred to as the coupled optical signal COS. Part of the optical power of the portion of the input optical signal IOS incident upon the first port P1-2-2 of the second portion 101-2-2 of the second core 101-2 is propagated to second port P2-2-2 of the second portion 101-2-2 of the second core 101-2. An optical signal comprising such propagated, *i*.*e.,* non-coupled, optical power is also referred to as the non-coupled optical signal NCOS.

The second port of the first optical waveguide 111-1 (or the second port P2-1-3 of the third portion 101-1-3 of the first core 101-1) is configured to emit a first output optical signal OOS1. The first output optical signal OOS1 is a portion, *e.g.,* substantially all of, the non-coupled optical signal NCOS.

The coupled optical signal COS is emitted from the second port P2-1-2 of the second portion 101-1-2 of the first core 101-1). The coupled optical signal COS may have a same fundamental mode (TE0 or TM0) as the input optical signal IOS or a higher order mode.

A coupled optical signal COS having a same fundamental mode as the input optical signal IOS is obtained when the second width W2-1 and the third width W2-2-1 (and thus a sixth width W2 of the first portion 101-2-1 of the second core 101-2) are each larger than the first width W1 and the fifth width W2-3 and the fourth width W2-2-2 (and thus the sixth width W2 of the first portion 101-2-1 of the second core 101-2) are each smaller than the first width W1. A coupled optical signal COS having a higher mode, *i.e.,* not the fundamental mode, as the input optical signal IOS is obtained when the second width W2-1 and the third width W2-2-1 are each smaller than the first width W1 and the fifth width W2-3 and the fourth width W2-2-2 are each smaller than the first width W1; the order of the higher mode increases as the second and third widths W2-1, W2-2 are diminished.

The non-coupled optical signal NCOS is emitted from the second port P2-2-2 of the second portion 101-2-2 of the second core 101-2. The non-coupled optical signal NOS has a same fundamental mode (TE0 or TM0) as the input optical signal IOS. The second port of the second optical waveguide 111-2 (or the second port P2-2-3 of the third portion 101-2-3 of the second core 101-2) is configured to emit a first output optical signal OOS1. The second port of the first optical waveguide 111-1 (or the second port P2-1-3 of the third portion 101-1-3 of the first core 101-1) is configured to emit a second output optical signal OOS2.

An amount of power of the coupled optical signal COS, and thus the first output optical signal OOS1 and the second output optical signal OOS2, depends on the length L2 of the second portions 101-1-2, 101-2-2, the second spacing SP2, a difference between the third width W2-2-1 and the fourth width W2-2-2. Reducing the second length L2 diminishes the power of the coupled optical signal COS. Increasing the second spacing SP2 diminishes the power of the coupled optical signal COS. Diminishing the difference between the third width W2-2-1 and the fourth width W2-2-2 reduces the power of the coupled optical signal COS. Optionally, an optical power of the first output optical signal OOS1 is about ninety percent of an optical power of the input optical signal IOS, and a power of the second output optical signal OOS2 is about ten percent of the optical power of the input optical signal IOS; in other words, the optical power of the first output optical signal OOS1 is about nine times the optical power of the second output optical signal OOS1.

By tapering, *e.g.*, adiabatically, (a) narrower the first spacing SP1 and (b) wider the third spacing SP3 along an axis parallel to a direction of travel of the input optical signal IOS, less optical power of the input optical signal IOS (in the first portions 101-1-1, 101-2-1) and each output optical signal OOS1, OOS2 (in the third portions 101-1-3, 101-2-3) is lost to both free space radiation and undesired higher order mode(s). Thus, substantially all of the input optical signal IOS received at the first port P1-2-1 is emitted from the second ports P2-1-1, P2-2-1 of the first portions 101-1-1, 101-2-1 of each of the first and the second cores 101-1, 101-2. Further, substantially all of the optical signal received from the second port P2-2-2 of the second portion 101-2-2 of the second core 101-2 is emitted as the first output optical signal OOS1 from the second port P2-2-3 of the third portion 101-2-3 of the second core 101-2. Also, substantially all of the optical signal received from the second port P2-2-2 of the second portion 101-1-2 of the first core 101-1 is emitted as the second output optical signal OOS2 from the second port P2-1-3 of the third portion 101-1-3 of the first core 101-1.

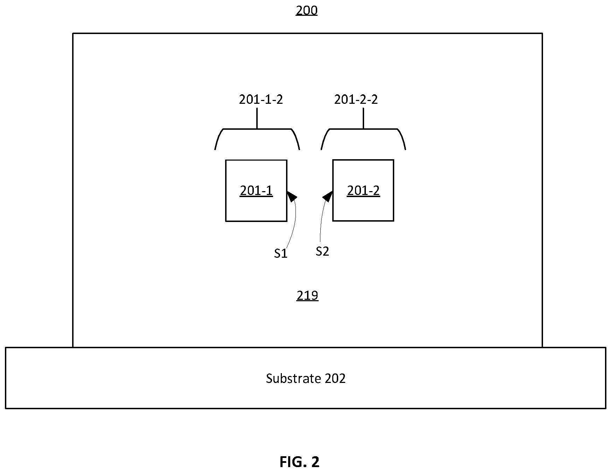

FIG. 2 illustrates a cross-sectional diagram of the optical coupler with diminished insertion loss 200 along line AA-AA'. The illustrated cross-section is of the adjacent second portions 201-1-2, 201-2-2. Each first, second, and third portion is formed by a high index of refraction core (or core) 201-1, 201-2 surrounded by a low index of refraction cladding (or cladding) 219. Optionally, the cladding 219 is formed over an optional substrate 202.

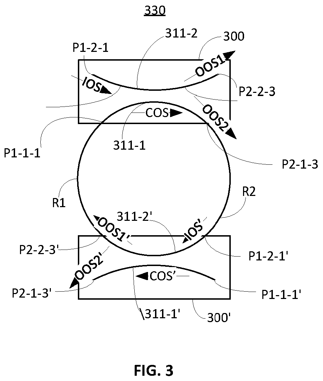

FIG. 3 illustrates a plan view of an optical resonator 330 including two optical couplers with diminished insertion loss (or two optical couplers) 300, 300'. Each optical coupler 300, 300' may be implemented using one or more of the techniques described elsewhere herein.

The optical resonator 330 includes a first optical coupler 300, a second optical coupler 300', a first optical waveguide R1, and a second optical waveguide R2. Optionally, the first and the second optical waveguides R1, R2 are planar optical waveguides; however, such first and second cores R1, R2 may be formed from other types of optical waveguide.

For pedagogical purposes, the optical resonator 330 is illustrated as an optical ring resonator, where the ring is formed by first optical waveguide 311-1 of the first optical coupler 300, the second optical waveguide 311-2' of the second optical coupler 300', the first resonator optical waveguide R1, and the second resonator optical waveguide R2. The optical resonator 330 may be any other type of optical resonator, *e.g*., a racetrack optical resonator or an oval optical resonator.

The first port P1-1-1 of the first optical waveguide 311-1 of the first optical coupler 300 and the second port P2-2-3' of the second optical waveguide 311-2' of the second optical coupler 300' are optically connected by the first resonator optical waveguide R1. The second port P2-1-3 of the first optical waveguide 311-1 of the first optical coupler 300 and the first port P1-2-1' the second optical waveguide 311-2' of the second optical coupler 300' are optically connected by the second resonator optical waveguide R2.

The optical resonator 330 is configured to receive an input optical signal IOS at first port P1-2-1 of the second optical waveguide 311-2 of the first optical coupler 300. A coupled optical signal COS is configured to be optically coupled from the second optical waveguide 311-2 of the first optical coupler 300 to the first optical waveguide 311-1 of the first optical coupler 300. The coupled optical signal COS is optionally ten percent or less of the power of the input optical signal IOS. All or most of the power of the input optical signal IOS which is not coupled to the coupled optical signal COS is transmitted as a first output optical signal OOS1 from the second port P2-2-3 of the second optical waveguide 311-2 of the first optical coupler 300.

A second output optical signal OOS2, which is at least a portion of the coupled optical signal COS, is configured to propagate to the second resonator optical waveguide R2. Another input optical signal IOS', which is at least a portion of the second output optical signal OOS2 is configured to be received at the first port P1-2-1' of the second optical waveguide 311-2' of the second optical coupler 300'. Another coupled optical signal COS' is configured to be optically coupled from the second optical waveguide 311-2' of the second optical coupler 300' to the first optical waveguide 311-1' of the second optical coupler 300'. The other coupled optical signal COS' is optionally ten percent or less of the power of the other input optical signal IOS'. All or most of the power of the other input optical signal IOS' which is not coupled to the other coupled optical signal COS' is transmitted from the second port P2-2-3' of the second optical waveguide 311-2' of the second optical coupler 300' to the first resonator optical waveguide R1.

By reducing an insertion loss in each optical coupler 300, 300', the optical resonator 330 has a higher Q factor resonator. The higher Q factor resonator does not require as much optical power to be injected into the optical resonator 330. Thus, a less expensive, lower power optical source can be used with the optical resonator 330. By reducing the optical power injected into optical resonator 330, Further, non-linear effects which may arise in the resonator are diminished due to diminished optical power.

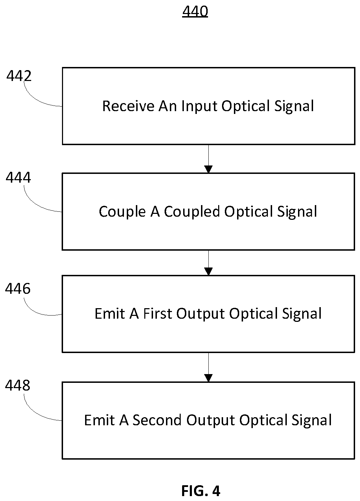

FIG. 4 illustrates one embodiment of a method 440 of optically coupling an optical signal in an optical coupler. To the extent that the methods shown in any Figures are described herein as being implemented with any of the systems illustrated herein, it is to be understood that other embodiments can be implemented in other ways. Optionally, method 440 may be implemented by the optical coupler described with respect to Figures 1-3. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner). The definitions set forth herein for a high confinement optical waveguide and a low confinement optical waveguide are applicable to method 440.

In block 442, an input optical signal including only a fundamental transverse electric mode or a fundamental transverse magnetic mode is received at, *e.g.,* a first port of a first portion of, a first core. In block 444, a coupled optical signal consisting of either a fundamental (TE or TM) mode is coupled from a second portion of the second core to a second portion of the first core. In block 446, a first output optical signal (consisting of only a fundamental (TE or TM) mode) is transmitted from, *e.g.,* a second port of a third portion of, the second core, wherein the first output optical signal is at least a portion of the input optical signal. In block 448, a second output optical signal (consisting of either a fundamental or a higher order (TE or TM) mode) is transmitted from, *e.g.,* a second port of a third portion of, the first core, wherein the second output optical signal is at least a portion of the coupled optical signal.

Terms of relative position as used in this application are defined based on a plane parallel to, or in the case of the term coplanar - the same plane as, the conventional plane or working surface of a layer, wafer, or substrate, regardless of orientation. The term "horizontal" or "lateral" as used in this application are defined as a plane parallel to the conventional plane or working surface of a layer, wafer, or substrate, regardless of orientation. The term "vertical" refers to a direction perpendicular to the horizontal. Terms such as "on," "side" (as in "sidewall"), "higher," "lower," "over," "top," and "under" are defined with respect to the conventional plane or working surface being on the top surface of a layer, wafer, or substrate, regardless of orientation. The term "coplanar" as used in this application is defined as a plane in the same plane as the conventional plane or working surface of a layer, wafer, or substrate, regardless of orientation.

### Exemplary Embodiments

Example 1 includes an optical coupler, comprising: a first core including a first portion, a second portion, and a third portion, wherein the second portion of the first core is optically connected between the first portion and the second portion of the first core, and wherein the first core has a first surface; and a second core including a first portion, a second portion, and a third portion, wherein the second portion of the second core is optically connected between the first portion and the second portion of the second core, and wherein the second core has a second surface; wherein each of the first and the second cores are covered by cladding, and wherein each of the first and the second cores has an index of refraction higher than an index of refraction of the cladding; wherein a first spacing between the first surface along the first portion of the first core and the second surface along the first portion of the second core adiabatically tapers narrower towards the second portions of the first and the second cores; wherein a width of the second portion of the second core is tapered narrower or wider from or after the first portion of the second core and towards the third portion of the second core; wherein a width of the third portion of the second core is narrower than a width of the first core; wherein a second spacing between the first surface along the third portion of the first core and the second surface along the third portion of the second core adiabatically tapers wider away from the second portions of the first and the second cores.

Example 2 includes the optical coupler of Example 1, wherein each of the first core covered by the cladding and the second core covered by the cladding is on a substrate.

Example 3 includes the optical coupler of any of Examples 1-2, wherein the width of each of the first core, the first portion of the second core, and the third portion of the second core is constant.

Example 4 includes the optical coupler of any of Examples 1-3, wherein a width of each (a) of the first portion of the second core and (b) at a first port, of the second portion of the second core, connected to the first portion of the second core is greater than the width of the first core.

Example 5 includes the optical coupler of Example 4, wherein a width of each of the first core, the first portion of the second core, and the third portion of the second core is constant.

Example 6 includes the optical coupler of any of Examples 1-5, wherein a width of each (a) of the first portion of the second core and (b) at a first port, of the second portion of the second core, connected to the first portion of the second core is less than the width of the first core.

Example 7 includes the optical coupler of Example 6, wherein a width of each of the first core, the first portion of the second core, and the third portion of the second core is constant.

Example 8 includes the optical coupler of any of Examples 1-7, wherein a third spacing between the first surface of the second portion of the first core and the second surface of the second portion of the second core is constant.

Example 9 includes a method of reducing insertion loss in an optical coupler including a first core including a first surface and a second core including a second surface, the method comprising: receiving, at a first port of a first portion of the second core, an input optical signal consisting of only a transverse electric fundamental mode or a transverse magnetic fundamental mode, wherein the second core include a first portion, a second portion, and a third portion, and wherein the second portion of the second core is optically connected between the first portion and the second portion of the second core; wherein a first spacing between the first surface along the first portion of the first core and the second surface along the first portion of the second core adiabatically tapers narrower towards the second portions of the first and the second cores, wherein each of the first core is covered by cladding, and wherein each of the first and the second cores has an index of refraction which is larger than an index of refraction of the cladding; coupling a coupled optical signal from the second portion of the second core to the second portion of the first core, wherein the coupled optical signal comprises at least a portion of power of the input optical signal; emitting a first output optical signal from the third portion of the second core, wherein the first output optical signal comprises at least another portion of power of the input optical signal; and emitting a second output optical signal from the third portion of the first core, wherein the second output optical signal is at least a portion of power of the coupled optical signal, and wherein a second spacing between the first surface along the third portion of the first core and the second surface along the third portion of the second core adiabatically tapers wider away from the second portions of the first and the second cores.

Example 10 includes the method of Example 9, wherein each of the first core covered by the cladding and the second core covered by the cladding is on a substrate.

Example 11 includes the method of any of Examples 9-10, wherein a width of each of the first core, the first portion of the second core, and the third portion of the second core is constant.

Example 12 includes the method of any of Examples 9-11, wherein a width of each (a) of the first portion of the second core and (b) at a first port, of the second portion of the second core, connected to the first portion of the second core is greater than the width of the first core.

Example 13 includes the method of any of Examples 9-12, wherein a width of each (a) of the first portion of the second core and (b) at a first port, of the second portion of the second core, connected to the first portion of the second core is less than the width of the first core.

Example 14 includes the method of any of Examples 9-13, wherein a third spacing between the first surface of the second portion of the first core and the second surface of the second portion of the second core is constant.

Example 15 includes an optical resonator comprising: a first optical coupler including: a first core including a first portion, a second portion, and a third portion, wherein the second portion of the first core is optically connected between the first portion and the second portion of the first core, and wherein the first core has a first surface; and a second core including a first portion, a second portion, and a third portion, wherein the second portion of the second core is optically connected between the first portion and the second portion of the second core, and wherein the second core has a second surface; wherein each of the first and the second cores are covered by cladding, and wherein each of the first and the second cores has an index of refraction higher than an index of refraction of the cladding; wherein a first spacing between the first surface along the first portion of the first core and the second surface along the first portion of the second core adiabatically tapers narrower towards the second portions of the first and the second cores; wherein a width of the second portion of the second core is tapered narrower or wider from or after the first portion of the second core and towards the third portion of the second core; wherein a width of the third portion of the second core is narrower than a width of the first core; wherein a second spacing between the first surface along the third portion of the first core and the second surface along the third portion of the second core adiabatically tapers wider away from the second portions of the first and the second cores; a second optical coupler including: a third core including a first portion, a second portion, and a third portion, wherein the second portion of the third core is optically connected between the first portion and the second portion of the third core, and wherein the third core has a third surface; and a fourth core including a first portion, a second portion, and a third portion, wherein the second portion of the fourth core is optically connected between the first portion and the second portion of the fourth core, and wherein the fourth core has a fourth surface; wherein each of the third and the fourth cores are covered by the cladding, and wherein each of the third and the fourth cores has an index of refraction higher than an index of refraction of the cladding; wherein a third spacing between the third surface along the first portion of the third core and the fourth surface along the first portion of the fourth core adiabatically tapers narrower towards the second portions of the third and the fourth cores; wherein a width of the second portion of the fourth core is tapered narrower or wider from or after the first portion of the fourth core and towards the third portion of the fourth core; wherein a width of the third portion of the fourth core is narrower than a width of the third core; wherein a fourth spacing between the third surface along the third portion of the third core and the fourth surface along the third portion of the fourth core adiabatically tapers wider away from the second portions of the third and the fourth cores; a first resonator optical waveguide optically connected between a first port of the first portion of the first core and a second port of the third portion of the fourth core; and a second resonator optical waveguide optically connected between a second port of the third portion of the first core and a first port of a first portion of the fourth core.

Example 16 includes the optical resonator of Example 15, wherein at least one of: a width of each of the first core, the first portion of the second core, and the third portion of the second core is constant; and a width of each of the third core, the first portion of the fourth core, and the third portion of the fourth core is constant.

Example 17 includes the optical resonator of any of Examples 15-16, wherein at least one of: a width of each (a) of the first portion of the second core and (b) at a first port of the second portion of the second core, connected to the first portion of the second core is greater than the width of the first core; and a width of each (a) of the first portion of the fourth core and (b) at a first port of the second portion of the fourth core, connected to the first portion of the fourth core is greater than the width of the third core.

Example 18 includes the optical resonator of any of Examples 15-17, wherein at least one of: a width of each (a) of the first portion of the second core and (b) at a first port, of the second portion of the second core, connected to the first portion of the second core is less than the width of the first core; and a width of each (x) of the first portion of the fourth core and (y) at a first port, of the second portion of the fourth core, connected to the first portion of the fourth core is less than the width of the third core.

Example 19 includes the optical resonator of any of Examples 15-18, wherein at least one of: a fifth spacing between the first surface of the second portion of the first core and the second surface of the second portion of the second core is constant; and a sixth spacing between the first surface of the second portion of the third core and the second surface of the second portion of the fourth core is constant.

Example 20 includes the optical resonator of any of Examples 15-19, wherein each of the first, the second, the third, and the fourth cores, the first resonator optical waveguide, and the second resonator optical waveguide is formed by planar optical waveguide on a substrate.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An optical coupler, comprising:
a first core including a first portion, a second portion, and a third portion, wherein the second portion of the first core is optically connected between the first portion and the second portion of the first core, and wherein the first core has a first surface; and
a second core including a first portion, a second portion, and a third portion, wherein the second portion of the second core is optically connected between the first portion and the second portion of the second core, and wherein the second core has a second surface;
wherein each of the first and the second cores are covered by cladding, and wherein each of the first and the second cores has an index of refraction higher than an index of refraction of the cladding;
wherein a first spacing between the first surface along the first portion of the first core and the second surface along the first portion of the second core adiabatically tapers narrower towards the second portions of the first and the second cores;
wherein a width of the second portion of the second core is tapered narrower or wider from or after the first portion of the second core and towards the third portion of the second core;
wherein a width of the third portion of the second core is narrower than a width of the first core;
wherein a second spacing between the first surface along the third portion of the first core and the second surface along the third portion of the second core adiabatically tapers wider away from the second portions of the first and the second cores.

2. The optical coupler of claim 1, wherein the width of each of the first core, the first portion of the second core, and the third portion of the second core is constant.

3. The optical coupler of claims 1-2, wherein a width of each (a) of the first portion of the second core and (b) at a first port, of the second portion of the second core, connected to the first portion of the second core is greater than the width of the first core.

4. The optical coupler of claims 1-3, wherein a width of each (a) of the first portion of the second core and (b) at a first port, of the second portion of the second core, connected to the first portion of the second core is less than the width of the first core.

5. The optical coupler of claims 1-4, wherein a third spacing between the first surface of the second portion of the first core and the second surface of the second portion of the second core is constant.

6. A method of reducing insertion loss in an optical coupler including a first core including a first surface and a second core including a second surface, the method comprising:
receiving, at a first port of a first portion of the second core, an input optical signal consisting of only a transverse electric fundamental mode or a transverse magnetic fundamental mode, wherein the second core include a first portion, a second portion, and a third portion, and wherein the second portion of the second core is optically connected between the first portion and the second portion of the second core;
wherein a first spacing between the first surface along the first portion of the first core and the second surface along the first portion of the second core adiabatically tapers narrower towards the second portions of the first and the second cores, wherein each of the first core is covered by cladding, and wherein each of the first and the second cores has an index of refraction which is larger than an index of refraction of the cladding;
coupling a coupled optical signal from the second portion of the second core to the second portion of the first core, wherein the coupled optical signal comprises at least a portion of power of the input optical signal;
emitting a first output optical signal from the third portion of the second core, wherein the first output optical signal comprises at least another portion of power of the input optical signal; and
emitting a second output optical signal from the third portion of the first core, wherein the second output optical signal is at least a portion of power of the coupled optical signal, and wherein a second spacing between the first surface along the third portion of the first core and the second surface along the third portion of the second core adiabatically tapers wider away from the second portions of the first and the second cores.

7. The method of claim 6, wherein a width of each of the first core, the first portion of the second core, and the third portion of the second core is constant.

8. The method of claims 6-7, wherein a width of each (a) of the first portion of the second core and (b) at a first port, of the second portion of the second core, connected to the first portion of the second core is greater than the width of the first core.

9. The method of claims 6-8, wherein a width of each (a) of the first portion of the second core and (b) at a first port, of the second portion of the second core, connected to the first portion of the second core is less than the width of the first core.

10. The method of claims 6-9, wherein a third spacing between the first surface of the second portion of the first core and the second surface of the second portion of the second core is constant.
